# EUROPEAN PATENT SPECIFICATION

(11) **EP 3 229 180 B1**
(45) Date of publication and mention of the grant of the patent: **02.06.2021**
(21) Application number: 17164688.8
(22) Date of filing: 04.04.2017
(51) Int. Cl.: G06K 19/077, G06K 19/00, G09F 15/00, G09F 1/10, B42D 15/04

(54) **CARD HOLDER**
KARTENHALTER
SUPPORT DE CARTE

(30) Priority: 04.04.2016 US 201662317724 P
(43) Date of publication of application: 11.10.2017
(73) Proprietor: Lyngsoe Systems Ltd., Bolton, ON L7E 4E8 (CA)
(72) Inventor: Holst, Marianne Attermann, 9000 Aalborg (DK)
(74) Representative: Patrade A/S

(56) References cited:
- EP-A2- 1 715 448
- DE-U1-202007 012 031
- DE-U1-202008 008 022
- US-A- 5 217 056
- US-A1- 2003 034 891
- US-A1- 2006 006 225
- US-A1- 2006 071 065
- US-A1- 2006 204 312
- US-A1- 2011 089 060
- US-A1- 2015 282 579
- US-A1- 2016 031 624
- US-B2- 7 336 185

## Description

The present invention relates generally to card holders and in particular, to a card holder for a radiofrequency identification (RFID) tag.

### BACKGROUND

In many settings, people carry visible identification cards, for example, at conferences and trade shows. Attendees are given identification cards that are clipped or otherwise attached to attendees' clothing. In such settings, it is desirable to have attendees carry a radio frequency identification (RFID) tag to facilitate transmission of data. An RFID system may be used to track attendees based on their particular RFID tag or read/write to or from their tag.

RFID systems enable data to be transmitted between a tag and an RFID reader via an antenna. Tags can be passive such that they are powered by a field emitted by the RFID reader or active such that they contain a power source to power the tag. When an RFID reader is within a particular proximity of a tag, the reader can read data from the tag and/or write data to the tag.

A number of factors can affect communication between RFID readers and tags. For example, the signal between the antenna of the RFID reader and the RFID tag is subject to interference, especially from moisture. Since people are composed of about 60% water, if RFID tags are close to the human body, interference may negatively impact communication between RFID tags and readers not permitting for accurate communication.

European Patent Application Publication No. 1715448 to Harris et al. is considered the closest state of the art as reflected in the preamble of independent claim 1. European Patent Application Publication No. 1715448 is directed to an identification badge that includes a badge holder having at least one surface, means to receive a name tag, an RFID tag affixed to the badge holder or the name tag and a spacer adapted to extend away from the at least one surface. The spacer creates a first distance between the RFID tag and a body of a person wearing the identification badge. Further disclosed is a lanyard that inhibits rotation of the badge holder to ensure the badge holder does not flip, rendering the spacer useless.

U.S. Patent No. 7,336,185 to Turner et al. is directed to a combination identification/tag holder. The holder comprises (i) a holder body, (ii) a first pouch for holding a traditional ID card, (iii) a second pouch for holding a tag container, (iv) a tag container, for placement in the second pouch and (v) a tag, such as an RFID tag, for placement in the tag container. The holder can be used in conjunction with an automated attendance monitoring system to monitor attendance of students or other individuals whose whereabouts need to be tracked.

Although card holders are known, improvements are desired. It is therefore an object of an aspect of the present invention to provide a novel card holder. This objective is achieved with a card holder as described in more detail in the following. For example, the card holder is used as a badge, optionally conference badge.

The invention is defined by claim 1. Preferred embodiments are set out in the dependent claims.

### DESCRIPTION OF THE DRAWINGS

Embodiments of the invention will now be described by way of example only with reference to the accompanying drawings in which:
**Figure 1** is a top plan view of a card holder in accordance with an embodiment of the invention in an open position;
**Figure 2** is a bottom plan view of the card holder of Figure 1 in the open position;
**Figure 3** is a side elevation view of the card holder of Figure 1 in between the open position and a closed position;
**Figure 4** is a side elevation view of the card holder of Figure 1 in the closed position;
**Figure 5** is a perspective view of the card holder of Figure 1 in the closed position with a clip; and
**Figure 6** is a top plan view of a card holder in accordance with another embodiment of the invention in an open position.

### DETAILED DESCRIPTION OF THE EMBODIMENTS

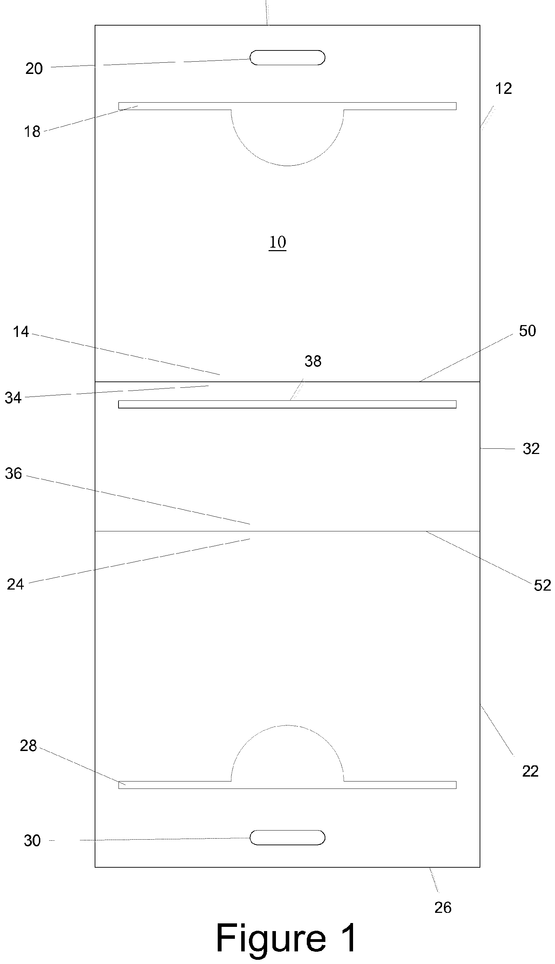

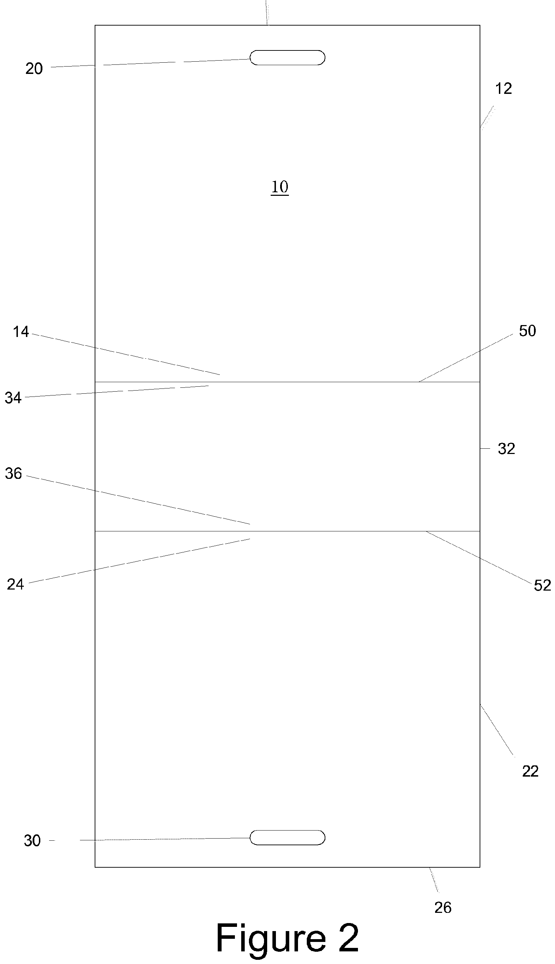

For convenience, like numerals in the description refer to like structures in the drawings. Referring to Figures 1 and 2, plan views of a card holder in an open position are illustrated generally as reference numeral 10. The card holder 10 is made of a clear plastic or any other suitable material. For example, the card holder may be made from PVC 25 C thickness. The card holder 10 comprises first, second, and third integrally formed enclosed sleeves 12, 32, and 22. The first enclosed sleeve 12 comprises a first end 14, a second end 16, a first slit 18, and a first aperture 20. The first slit 18 forms a length-wise opening in one side of the first enclosed sleeve 12. The second enclosed sleeve 22 comprising a first end 24, a second end 26, a second slit 28, and a second aperture 30. The second slit forms a length-wise opening in one side of the second enclosed sleeve 22. The third enclosed sleeve 32 comprising a first end 34, a second end 36, and a third slit 38. The third slit 38 forms a length-wise opening in one side of the third enclosed sleeve 32. The first end 14 of the first enclosed sleeve 12 adjoins the first end 34 of the third enclosed sleeve 32 along a first crease 50. The first end 24 of the second enclosed sleeve 22 adjoins the second end 36 of the third enclose sleeve 32 along a second crease 52.

The first slit 18 of the first enclosed sleeve 12 and the second slit 28 of the second enclosed sleeve 22 are sized to receive identification cards. An identification card can be inserted inside of the first enclosed sleeve 22 by inserting the identification card into the first slit 18 towards the first end 14 of the first enclosed sleeve 12. An identification card can be inserted inside of the second enclosed sleeve 32 by inserting the identification card into the second slit 28.

The third slit 38 of the second enclosed sleeve 32 is sized to receive an RFID tag. An RFID tag can be inserted inside of the third enclosed sleeve 32 by inserting the tag into the third slit 38.

The first and second apertures 20 and 30 are sized to receive a clip to attach a user's clothing or lanyard.

The card holder 10 is bendable along the first and second creases 50 and 52 between an open position and a closed position as will be described. In the open position, the first, second, and third enclosed sleeves 12, 22 and 32 are substantially coplanar. In the closed position, the card holder 10 is bent along the first and second creases 50 and 52 so that the first and second apertures 20 and 30 are proximal one another, forming a generally triangular shape, as described below.

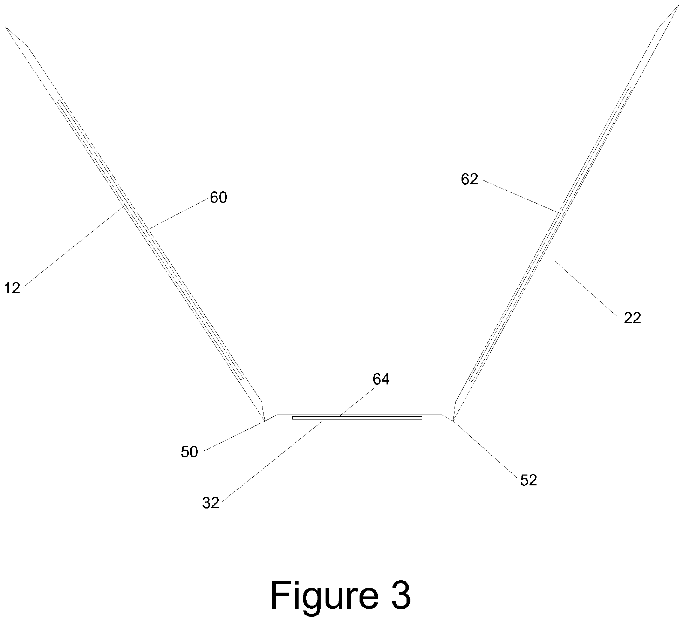

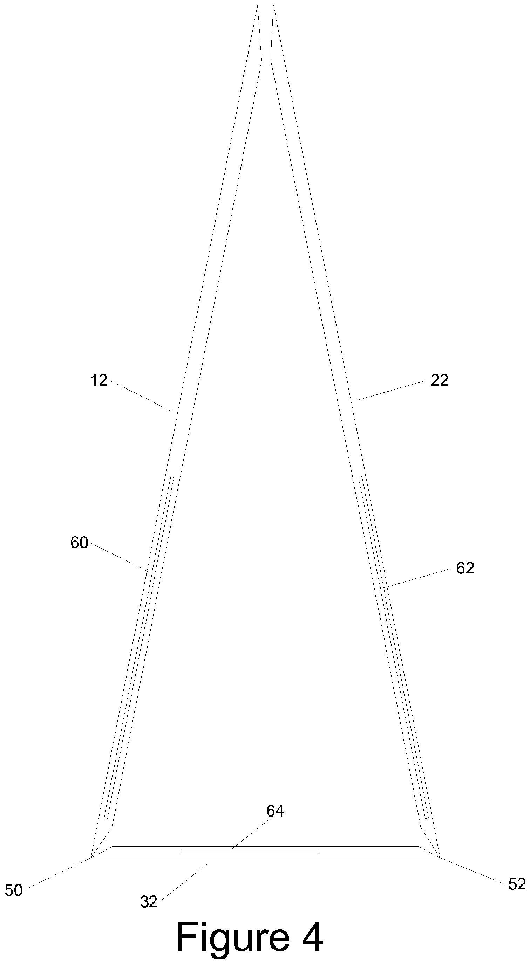

Referring now to Figures 3 and 4, movement from the open position to the closed position is shown. The view is from an end parallel with the surface of the sleeves 12, 22, 32. In use, a first card 60 in inserted into the first slit 18 in the first enclosed sleeve 12 towards the first end 14 of the first enclosed sleeve 12. A second card 62 is inserted into the second slit 28 of the second enclosed sleeve 22 towards the first end 24 of the second enclosed sleeve 22. An RFID tag 64 is inserted into the third slit 38 of the third enclosed sleeve 32 towards the second end 36 of the second enclose sleeve 32. The first and second enclosed sleeves 12 and 22 are then bent along the first and second connection lines 50 and 52 as shown in Figure 3 towards the open position. In this embodiment, the first and second cards 60 and 62 can be one or more of paper identification cards, other near field communication cards, and a supplemental RFID tag, and the RFID tag 64 is a passive RFID tag. Once the first second enclosed sleeves 12 and 22 contact each other, as shown in Figure 4, the card holder 10 is in the closed position. As can be seen in this end view, in the close position, the card holder 10 is in a substantial triangular shape with the third enclosed sleeve 32 forming a base of the triangle, and the first sleeve 12 and the second sleeve 22 extending from the base forming two legs of the triangle.

Further, in the closed position, the first and second apertures 20 and 30 are aligned such that a clip 70 may be inserted there through to keep the card holder 10 in the closed position. The clip 70 can further be used to removably attach the card holder 10 to a person's clothing or to a lanyard that can be worn by the person. Furthermore, in the closed position, the third enclosed sleeve 32 is sufficiently perpendicular to the first and second enclosed sleeves 12 and 22. This ensures that the RFID tag 64 will be maintained in a position that is substantially perpendicular to the person's body when the card holder 10 is being worn.

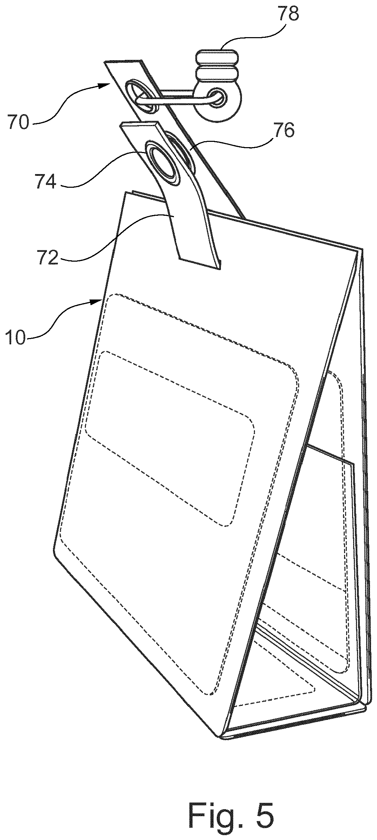

Referring now to Figure 5, the clip 70 is shown connected to the card holder 10 in the closed position. The clip 70 is inserted into the first and second apertures 10 and 20 and maintains the card holder 10 in the closed position. The clip 70 is further used to connect to a person's clothing or the lanyard. In this embodiment, the clip 70 comprises a plastic strap 72, two interlocking discs 74 and 76 forming a snap fastener, and a retractable card holder reel 78. The retractable card holder reel 78 has a clip that can be secured to a person's clothing.

When the card holder 10 is secured to a person's clothing, rotation of the card holder 10 about the retractable card holder reel 78 or the lanyard does not affect the relative position of the RFID tag 64 to a person's body. That is, the RFID tag 64 is still positioned so that is not flush with the person's body. This minimizes the effect of interference caused by the water and moisture of the person on RFID communication between the RFID tag 64 and a reader.

As previously stated, the card holder 10 can be made of plastic making it inexpensive to manufacture and light weight. As conferences attendees' often simply dispose of card holders after conferences, ensuring that the card holder 10 is cheap to manufacture ensures the cost of purchasing card holders borne by conference organizers is minimal. Furthermore, the unitary structure of the card holder 10 may reduce production costs over card holders with moving parts and those that require assembly prior to use.

In the present embodiment, each of the first, second, and third slits 18, 28, and 38 is positioned on the same side of the card holder 10, shown as the bottom plan view of Figure 1. In the open position, the cards 60 and 62 and the RFID tag 64 may be easily inserted into their respective sleeves. In the closed position, each of the first, second, and third slits 18, 28, and 38 is positioned on an inside of the card holder 10, making it more difficult for the cards 60 and 62 or the RFID tag 64 to accidentally fall out.

Although the embodiments described above refer to each of the first, second, and third slits 18, 28, and 38 positioned on the same side of the card holder 10, in alternative embodiments, the first, second, and third slits 18, 28, and 38 may be on different sides of the card holder 10, on both sides of the card holder, or various combinations thereof.

Further, although the embodiments described above refer to the card holder 10 as being integrally formed and bending about the first and second creases 50 and 52, other connection mechanisms may be used.

Yet further, although the embodiments described above reference the clip 70, other connection mechanism may be used. For example, Velcro™ may be affixed to each of the first and second enclosed sleeves 10 and 20.

Yet further, although the embodiments described above reference both the first and second enclosed sleeves 12 and 22 as comprising first and second slits 18 and 28 for receiving first and second cards 60 and 62, in alternative embodiments only one of the first and second enclosed sleeves 12 and 22 or neither of the first and second enclosed sleeves 12 and 22 may comprise a corresponding slit 18 and 28.

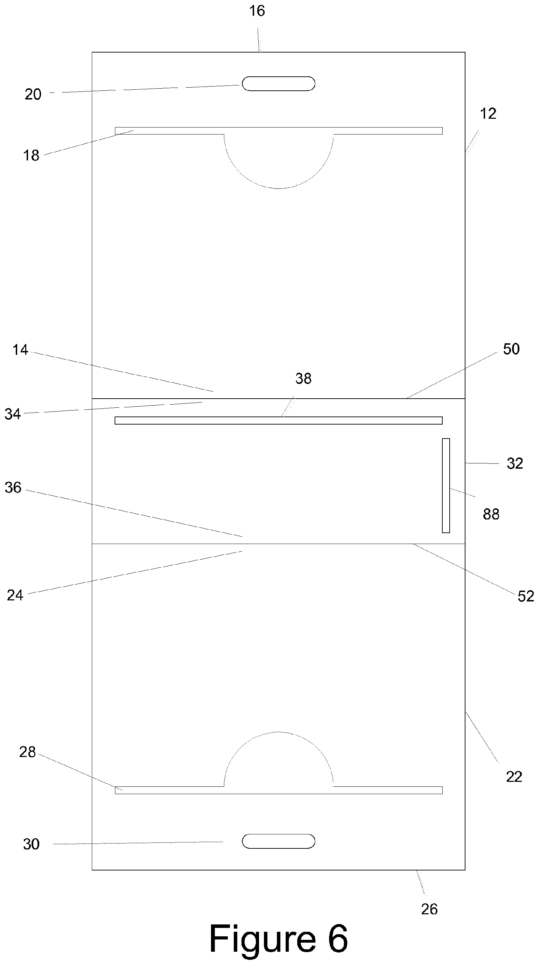

Yet further, although the previous embodiment describe the card holder 10 as being clear, in an alternative embodiment only one side of the card holder 10 may be clear. Yet further, although the embodiments described above reference the first, second and third slits 18, 28, and 38 as being length-wise, in an alternative embodiment, one or more of the first, second and third slits 18, 28, and 38 may be width-wise. In yet an alternative embodiment, one or more of the first, second and third enclosed sleeves 12, 22, and 32 may include both length-wise first, second, and third slits 18, 28, and 38 and width-wise fourth, fifth, and sixth slits 88, respectively, as shown in Figure 6.

## Claims

1. A plastic card holder (10) in combination with a radio frequency identification, RFID, tag (64), the card holder (10) comprising:
a first enclosed sleeve (12) comprising a first slit (18), the first sleeve (12) being configured to receive a first card via the first slit (18);
a second enclosed sleeve (22) comprising a second slit (28), the second sleeve (22) being configured to receive a second card via the second slit (28);
a lanyard or a connection mechanism to secure the card holder (10) to clothing,
**characterised in that** the card holder (10) further comprises a third enclosed sleeve (32) comprising a third slit (38, 88), the third sleeve (32) being coupled at opposite ends (14, 24) to the first enclosed sleeve (12) and the second enclosed sleeve (22), respectively, the third enclosed sleeve with its third slit being dimensioned and configured to receive the radio frequency identification, RFID, tag via the third slit (38, 88);
wherein the slits form a lengthwise opening in one side of the enclosed sleeve, respectively:
wherein in a closed position of the card holder, an end (16) of the first enclosed sleeve (12) and an end (26) of the second enclosed sleeve (22) are proximal one another such that the card holder (10) is substantially triangular in shape;
wherein the lanyard or connection mechanism is provided at the ends (16,26) of the first and second enclosed sleeves (12,22) for maintaining an orientation of the card holder (10) with the ends of the first and second enclosed sleeves (12, 22) at a top and the third enclosed sleeve (32) at a bottom of the substantially triangular shape when the card holder (10) is being worn by a person by the lanyard or when being connected to the clothing by the connection mechanism;
wherein the RFID tag (64) is inside the third enclosed sleeve; wherein the third enclosed sleeve (32) is sufficiently perpendicular relatively to one of the first and second enclosed sleeves (12, 22) to ensure that the RFID tag (64) is maintained in a position such that its antenna is substantially perpendicular to said person's body when the card holder (10) is being worn by said person by the lanyard or when being connected to the clothing by the connection mechanism for minimizing interference caused by water and moisture of the person on RFID communication between the RFID tag (64) and a reader.

2. The card holder of claim 1, wherein the card holder (10) is made of clear plastic.

3. The card holder of claim 1or 2, wherein both of the first and second enclosed sleeves (12, 22) comprise apertures (20, 30) which are aligned in the closed position, wherein the card holder (10) comprises a clip (70) in the first and second apertures (20, 30) for maintaining the card holder (10) in the closed position.

4. The card holder of any one of claims 1 to 3, wherein the first, second, and third enclosed sleeves (12, 22, 32) is one piece formed by the first enclosed sleeve (12) being coupled to the third enclosed sleeve (32) along a first crease (50) and the second enclosed sleeve (22) being coupled to the third enclosed sleeve (32) along a second crease (52), and wherein the card holder (10) is bendable along the first crease (50) and the second crease (52) to transition the card holder (10) to the closed position.

5. The card holder of any one of claims 1 to 3, wherein the first and second enclosed sleeves (12,22) are coupled to the third enclosed sleeves (32) using hinges.

6. The card holder of any preceding claims, wherein the slits (18, 28 38) are positioned inside the card holder (10) when in the closed position.

7. The card holder of any preceding claim, further comprising a supplemental RFID tag (60,62) in one or both of the first enclosed sleeve (12) and the second enclosed sleeve (22).

8. The card holder of any preceding claims, wherein the third enclosed sleeve (32) further comprises a sixth slit (88) configured to receive the RFID tag (64), and wherein the third slit (38) is configured length-wise and the sixth slit (88) is configured width-wise.

## Patentansprüche

1. Kunststoffkartenhalter (10) in Kombination mit einem Hochfrequenzerkennungs(RFID)-Etikett (64), wobei der Kartenhalter (10) Folgendes umfasst:
eine erste eingefasste Hülse (12), die einen ersten Schlitz (18) umfasst, wobei die erste Hülse (12) zum Aufnehmen einer ersten Karte über den ersten Schlitz (18) konfiguriert ist;
eine zweite eingefasste Hülse (22), die einen zweiten Schlitz (28) umfasst, wobei die zweite Hülse (22) zum Aufnehmen einer zweiten Karte über den zweiten Schlitz (28) konfiguriert ist;
ein Umhängeband oder einen Verbindungsmechanismus zum Sichern des Kartenhalters (10) an Kleidung,
**dadurch gekennzeichnet, dass** der Kartenhalter (10) ferner eine dritte eingefasste Hülse (32) umfasst, die einen dritten Schlitz (38, 88) umfasst, wobei die dritte Hülse (32) an gegenüberliegenden Enden (14, 24) an die erste eingefasste Hülse (12) beziehungsweise die zweite eingefasste Hülse (22) gekoppelt ist, wobei die dritte eingefasste Hülse mit ihrem dritten Schlitz zum Aufnehmen eines Hochfrequenzerkennungs(RFID)-Etiketts über den dritten Schlitz (38, 88) bemessen und konfiguriert ist;
wobei die Schlitze eine Längsöffnung in einer Seite der eingefassten Hülse ausbilden, beziehungsweise:
wobei ein Ende (16) der ersten eingefassten Hülse (12) und ein Ende (26) der zweiten eingefassten Hülse (22) in einer geschlossenen Position des Kartenhalters derart proximal zueinander liegen, dass der Kartenhalter (10) im Wesentlichen eine dreieckige Form aufweist;
wobei das Umhängeband oder der Verbindungsmechanismus an den Enden (16,26) der ersten und zweiten eingefassten Hülse (12,22) zum Aufrechterhalten einer Ausrichtung des Kartenhalters (10) mit den Enden der ersten und zweiten eingefassten Hülse (12,22) an einer Oberseite und der dritten eingefassten Hülse (32) an einer Unterseite der im Wesentlichen dreieckigen Form bereitgestellt ist, wenn der Kartenhalter (10) an dem Umhängeband durch eine Person getragen wird oder wenn er durch den Verbindungsmechanismus mit der Kleidung verbunden ist;
wobei das RFID-Etikett (64) im Inneren der dritten eingefassten Hülse liegt; wobei die dritte eingefasste Hülse (32) hinreichend senkrecht relativ zu einer der ersten und zweiten eingefassten Hülse (12, 22) liegt, um sicherzustellen, dass das RFID-Etikett (64) derart in einer Position gehalten wird, dass seine Antenne im Wesentlichen senkrecht zu dem Körper der Person liegt, wenn der Kartenhalter (10) durch die Person an dem Umhängeband getragen wird oder wenn er durch den Verbindungsmechanismus mit der Kleidung verbunden ist, um die durch Wasser und Feuchtigkeit der Person verursachte Interferenz auf die RFID-Kommunikation zwischen dem RFID-Etikett (64) und einem Lesegerät zu minimieren.

2. Kartenhalter nach Anspruch 1, wobei der Kartenhalter (10) aus durchsichtigem Kunststoff gefertigt ist.

3. Kartenhalter nach Anspruch 1 oder 2, wobei sowohl die erste als auch die zweite eingefasste Hülse (12, 22) Aperturen (20, 30) umfassen, welche in der geschlossenen Position ausgerichtet sind, wobei der Kartenhalter (10) einen Clip (70) in der ersten und zweiten Apertur (20, 30) zum Halten des Kartenhalters (10) in der geschlossenen Position umfasst.

4. Kartenhalter nach einem der Ansprüche 1 bis 3, wobei es bei der ersten, zweiten und dritten eingefassten Hülse (12, 22, 32) um Stückhandelt, das durch die erste eingefasste Hülse (12), die an die dritte eingefasste Hülse (32) entlang einer ersten Falte (50) gekoppelt ist, und die zweite eingefasste Hülse (22), die an die dritte eingefasste Hülse (32) entlang einer zweiten Falte (52) gekoppelt ist, ausgebildet ist, und wobei der Kartenhalter (10) entlang der ersten Falte (50) und der zweiten Falte (52) biegsam ist, um den Kartenhalter (10) in die geschlossene Position zu verbringen.

5. Kartenhalter nach einem der Ansprüche 1 bis 3, wobei die erste und zweite eingefasste Hülse (12,22) unter Verwendung von Scharnieren an die dritten eingefassten Hülsen (32) gekoppelt sind.

6. Kartenhalter nach einem der vorhergehenden Ansprüche, wobei die Schlitze (18, 28 38) im Inneren des Kartenhalters (10) positioniert sind, wenn er sich in der geschlossenen Position befindet.

7. Kartenhalter nach einem der vorhergehenden Ansprüche, ferner umfassend eine zusätzliches RFID-Etikett (60,62) in einer oder beiden der ersten eingefassten Hülse (12) und der zweiten eingefassten Hülse (22).

8. Kartenhalter nach einem der vorhergehenden Ansprüche, wobei die dritte eingefasste Hülse (32) ferner einen sechsten Schlitz (88) umfasst, der zum Aufnehmen des RFID-Etiketts (64) konfiguriert ist, und wobei der dritte Schlitz (38) der Länge nach konfiguriert ist und der sechste Schlitz (88) der Breite nach konfiguriert ist.

## Revendications

1. Support de carte en plastique (10) combiné à une étiquette d'identification par radiofréquence, RFID (64), le support de carte (10) comprenant :
une première pochette de protection (12) comprenant une première fente (18), la première pochette (12) étant conçue pour recevoir une première carte via la première fente (18) ;
une deuxième pochette de protection (22) comprenant une deuxième fente (28), la deuxième pochette (22) étant conçue pour recevoir une seconde carte via la deuxième fente (28),
un cordon ou un mécanisme de liaison pour fixer le support de carte (10) à un vêtement,
**caractérisé en ce que** le support de carte (10) comprend en outre une troisième pochette de protection (32) comprenant une troisième fente (38, 88), la troisième pochette (32) étant couplé à des extrémités opposées (14, 24) à la première pochette de protection (12) et à la deuxième pochette de protection (22), respectivement, la troisième pochette de protection avec sa troisième fente étant dimensionnée et conçue pour recevoir l'étiquette d'identification par radiofréquence, RFID via la troisième fente (38, 88) ;
dans lequel les fentes forment une ouverture dans le sens de la longueur dans un côté de la pochette de protection, respectivement ;
dans lequel dans une partie fermée du support de carte, une extrémité (16) de la première pochette de protection (12) et une extrémité (26) de la deuxième pochette de protection (22) sont proximales l'une de l'autre de telle sorte que le support de carte (10) est sensiblement de forme triangulaire ;
dans lequel le cordon ou le mécanisme de liaison est prévu aux extrémités (16, 26) des première et deuxième pochettes de protection (12, 22) pour maintenir une orientation du support de carte (10) avec les extrémités des première et deuxième pochettes de protection (12, 22) au niveau d'un sommet et la troisième pochette de protection (32) au niveau d'un fond de la forme sensiblement triangulaire lorsque le support de carte (10) est porté par une personne par le cordon ou lorsqu'il est relié au vêtement par le mécanisme de liaison ;
dans lequel l'étiquette RFID (64) est à l'intérieur de la troisième pochette de protection ; dans lequel la troisième pochette de protection (32) est suffisamment perpendiculaire par rapport à l'une des première et deuxième pochettes de protection (12, 22) pour garantir que l'étiquette RFID (64) est maintenue dans une position telle que son antenne est sensiblement perpendiculaire au corps de ladite personne lorsque le support de carte (10) est porté par ladite personne par le cordon ou lorsqu'il est relié au vêtement par le mécanisme de liaison pour minimiser une interférence causée par l'eau et la transpiration de la personne sur une communication RFID entre l'étiquette RFID (64) et un lecteur.

2. Support de carte selon la revendication 1, dans lequel le support de carte (10) est en plastique transparent.

3. Support de carte selon la revendication 1 ou 2, dans lequel les deux des première et deuxième pochettes de protection (12, 22) comprennent des ouvertures (20, 30) qui sont alignées dans la position fermée, dans lequel le support de carte (10) comprend une attache (70) dans les première et seconde ouvertures (20, 30) pour maintenir le support de carte (10) dans la position fermée.

4. Support de carte selon l'une quelconque des revendications 1 à 3, dans lequel les première, deuxième et troisième pochettes (12, 22, 32) sont formées d'un seul tenant par l'accouplement de la première pochette de protection (12) à la troisième pochette de protection (32) le long d'un premier pli (50) et l'accouplement de la deuxième pochette de protection (22) à la troisième pochette de protection (32) le long d'un second pli (52), et dans lequel le support de carte (10) peut être plié le long du premier pli (50) et du second pli (52) pour faire passer le support de carte (10) à la position fermée.

5. Support de carte selon l'une quelconque des revendications 1 à 3, dans lequel les première et deuxième pochettes de protection (12, 22) sont couplées à la troisième pochette de protection (32) par le biais de charnières.

6. Support de carte selon l'une quelconque des revendications précédentes, dans lequel les fentes (18, 28, 38) sont positionnées à l'intérieur du support de carte (10) lorsqu'il est dans la position fermée.

7. Support de carte selon une quelconque revendication précédente, comprenant en outre une étiquette RFID (60, 62) supplémentaire dans une ou les deux de la première pochette de protection (12) et de la deuxième pochette de protection (22).

8. Support de carte selon l'une quelconque des revendications précédentes, dans lequel la troisième pochette de protection (32) comprend en outre une sixième fente (88) conçue pour recevoir l'étiquette RFID (64), et dans lequel la troisième fente (38) est conçue dans le sens de la longueur et la sixième fente (88) est conçue dans le sens de la largeur.
